# EUROPÄISCHE PATENTANMELDUNG

(11) **EP 0 630 833 A1**
(43) Veröffentlichungstag der Anmeldung: **28.12.1994**
(21) Anmeldenummer: 94105598.0
(22) Anmeldetag: 12.04.1994
(51) Int. Cl.: B65G 17/00, B65G 15/12

(54) **Duplexförderer**

(30) Priorität: 23.06.1993 DE 4320706
(71) Anmelder: PROTECH AUTOMATION GmbH, D-51147 Köln (DE)
(72) Erfinder: Blöcker, Detlef, Dipl.-Ing., D-53639 Königswinter 21 (DE); Feige, Burkhard, Dipl.-Ing., D-51469 Bergisch Gladbach 2 (DE); Heuer, Walter, D-53567 Buchholz (DE)
(74) Vertreter: Selting, Günther, Dipl.-Ing.

(57) **Zusammenfassung**

Der Duplexförderer weist zwei parallele Förderriemen (10) auf, die Werkstückträger (20) tragen, welche angehalten werden können, während die Förderriemen (10) weiterlaufen. Der Werkstückträger (20) weist an seiner Unterseite einen Umgriff (23) auf, der den Förderriemen (10) und die diesen Riemen tragende Gleitschiene (16) umgreift und mit einem horizontalen Schenkel (25) unter die Gleitschiene greift. Der Förderriemen (10) ist mit einer Rippe (18) in einer Nut (17) der Gleitschiene (16) geführt. Die seitliche Zentrierung des Werkstückträgers (20) erfolgt dadurch, daß der Umgriff (23) von den Innenkante (26) des Förderriemens (10) geführt wird, wobei der Förderriemen (10) seinerseits in bezug auf die Gleitschiene (16) geführt ist.

## Beschreibung

Die Erfindung betrifft einen Duplexförderer mit zwei parallelen Förderriemen, die Werkstückträger tragen, welche lose auf den Förderriemen aufliegen und bei kontinuierlich weiterlaufenden Förderriemen angehalten werden können.

In Fertigungs- und Montagelinien werden Werkstückträger benutzt, auf denen die zu bearbeitenden Werkstücke angeordnet werden und die auf einem Duplexförderer den einzelnen Bearbeitungsstationen zugeführt werden, an denen die Werkstückträger angehalten und ggf. von den Förderriemen abgehoben werden. Bei schmalen Duplexförderern erfolgt die seitliche Führung der Werkstückträger durch parallele Führungsleisten, die zu beiden Seiten des Duplexförderers verlaufen. Bei breiten Werkstückträgern mit einer Breite von 50 cm und mehr sind seitliche Führungsleisten nicht immer zufriedenstellend, weil die Werkstückträger zwischen ihnen verkanten können.

Aus der Patentanmeldung DE 40 28 181 A1 ist ein Duplexförderer mit zwei auf ortsfesten Gleitschienen laufenden parallelen Förderriemen bekannt. Auf die Förderriemen sind Werkstückträger aufgesetzt, die mit ihren Seitenrändern lose auf den Förderriemen aufliegen und angehalten werden können, während die Förderriemen unter den Werkstückträgern weiterlaufen. Jeder Förderriemen läuft in seinem Obertrum in der Führungsnut einer Gleitschiene und er wird durch die seitlichen Kanten der Führungsnut in Längsrichtung geführt. Die außenliegenden Kanten der Führungsnut sind so hoch, daß sie auch den Werkstückträger seitlich führen. Die äußeren Kanten bilden somit parallele Führungsleisten, die zu beiden Seiten des Duplexförderers verlaufen und bei großen Breiten des Duplexförderers eine störungsfreie Führung nicht immer sicherstellen können.

Die Patentschrift DE 41 24 291 C2 beschreibt einen Duplexförderer, bei dem Werkstückträger im Obertrum in der einen Richtung und im Untertrum in der entgegengesetzten Richtung gefördert werden können. Dabei liegen die Werkstückträger stets auf der Oberseite der Förderriemen auf, d.h. sie müssen bei einem Wechsel vom Obertrum zum Untertrum umgesetzt werden. Besondere Führungsmaßnahmen zur Gewährleistung einer exakten Parallelführung der Werkstückträger sind nicht vorgesehen.

Aus Darrel, Johnson: Guiding and Controlling Conveyor Belts, Automation - December (1972), S. 56, 57 ist ein Riemenförderer bekannt, der aus einem einzigen Breitriemen besteht, welcher an seiner Unterseite eine längslaufende Rippe zur besseren Riemenführung aufweist.

Der Erfindung liegt die Aufgabe zugrunde, einen Duplexförderer zu schaffen, der die Werkstückträger auch bei großen Werkstückträgerbreiten sicher positioniert und in bleibender Ausrichtung zentrisch zu den beiden Förderriemen hält, ohne daß die Gefahr von Verkantungen besteht.

Die Lösung dieser Aufgabe erfolgt erfindungsgemäß mit den im Patentanspruch 1 angegebenen Merkmalen.

Bei dem erfindungsgemäßen Duplexförderer haben die Werkstückträger an ihrer Unterseite U-förmige Umgriffe, welche die einander zugewandten Innenkanten der Förderriemen umgreifen. Die Förderriemen sind ihrerseits in bezug auf die Gleitschienen durch zusammengreifende Rippen und Führungsnuten geführt. Die seitliche Abstützung der Werkstückträger erfolgt an den Innenkanten der Förderriemen, die einen genau bemessenen Abstand voneinander haben. Dadurch kann ein Werkstückträger in bezug auf die beiden Förderriemen weder zu der einen, noch zu der anderen Seite hin verschoben werden. Ein besonderer Vorteil besteht darin, daß bei dem Fördervorgang keine Relativbewegung zwischen den Förderriemen und den Werkstückträgern erfolgt, und daß somit während der Mitnahme der Werkstückträger Verkantungen überhaupt nicht auftreten können. Wird ein Werkstückträger angehalten, während der Förderer weiterläuft, ist an den Führungskanten eine Relativbewegung vorhanden, jedoch können Verkantungen dann ebenfalls nicht auftreten, wenn der Werkstückträger in exakter Ausrichtung festgehalten wird. Dies kann z.B. mit seitlichen Klemm- oder Positioniervorrichtungen erfolgen, die in die Seitenwände des Werkstückträgers eingreifen. Vorzugsweise befinden sich die Rippen an den Förderriemen und die Führungsnuten an den Gleitschienen, jedoch ist es auch möglich, die Rippen an den Gleitschienen und die Führungsnuten an den Förderriemen vorzusehen.

Die an den Werkstückträgern vorgesehenen Umgriffe können zweckmäßigerweise im Rücklauftrum des Duplexförderers dazu benutzt werden, die Werkstückträger hängend an den Untertrumen der Förderriemen festzuhalten, wobei die Förderriemen ihrerseits durch längslaufende Gleitschienen abgestützt sind, wodurch der Werkstückträger selbsttätig in tangentialer Ausrichtung zur umlenkrolle gehalten wird.

Im folgenden wird unter Bezugnahme auf die Zeichnungen ein Ausführungsbeispiel der Erfindung näher erläutert.

Es zeigen:

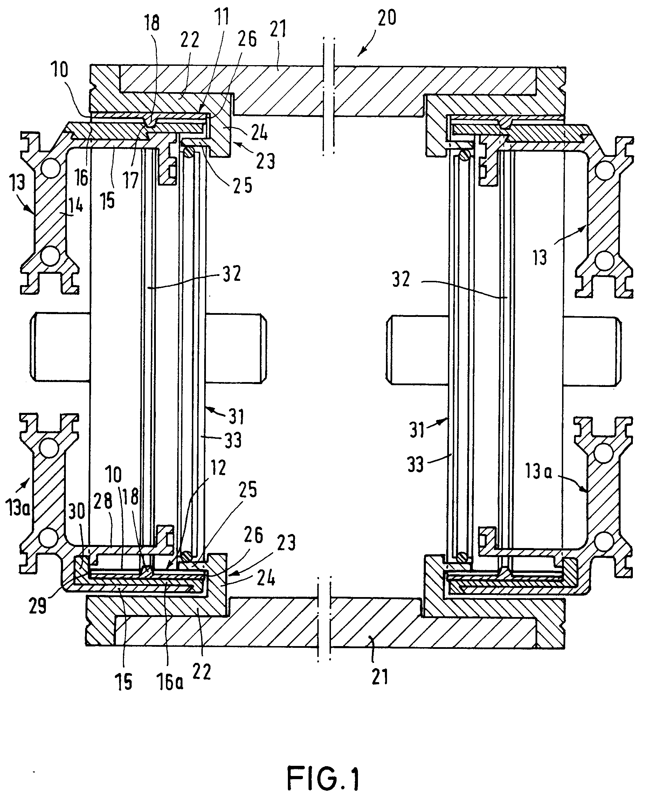

- Fig. 1: einen Querschnitt durch den Duplexförderer,
- Fig. 2: eine Draufsicht einer Umlenkrolle und
- Fig. 3: eine Stirnansicht einer Unlenkrolle.

Der Duplexförderer weist zwei parallele endlose, als Zahnriemen ausgebildete Förderriemen 10 auf, die einen gegenseitigen Abstand voneinander haben und einen Obertrum 11 und einen darunter angeordneten Rücklauftrum 12 bilden. Der Obertrum eines jeden Förderriemens ist durch eine Profilleiste 13 abgestützt, die einen horizontalen Tragbalken 14 und einen seitlich davon abstehenden freiausragenden Tragarm 15 aufweist. Der Tragarm 15 ist mit einer längslaufenden Schwalbenschwanznut ausgestattet, in der eine eingeschobene Gleitschiene 16 aus Kunststoff verankert ist. Diese Gleitschiene steht über das Ende des Tragarms 15 hinaus vor. Die Gleitschiene 16 ist in ihrer Oberseite mit einer längslaufenden Führungsnut 17 versehen. In dieser Führungsnut 17 läuft eine an der Unterseite des Förderriemens 10 vorgesehene längslaufende Rippe 18. Diese Rippe 18 ist hier in der Mitte der Breite des Förderriemens angeordnet.

Im Obertrum 11 liegen Werkstückträger 20 mit ihren seitlichen Rändern auf den Förderriemen 11 auf. Jeder Werkstückträger 20 weist einen aus Aluminium bestehendes Mittelteil 21 auf, an dem seitliche Angriffsleisten 22 aus Stahl befestigt sind. An diesen Angriffsleisten können ortsfest angeordnete Klemm- oder Positioniervorrichtungen angreifen. Ferner ist jeder Werkstückträger 20 mit einer aus Stahl bestehenden längslaufenden Leiste 22 versehen, die auf dem Förderriemen 10 aufliegt und diesen Förderriemen vollständig bedeckt, d.h. die Außenkante der Leiste 22 ist etwa bündig mit der Außenkante des Förderriemens 10. Die Leiste 22 ist an ihrer dem anderen Förderriemen zugewandten Innenseite mit einem U-förmigen Umgriff 23 versehen, der einen senkrecht nach unten gerichteten Schenkel 24 und einen horizontal nach außen davon abstehenden unteren Schenkel 25 aufweist. Der Umgriff 23 umgreift die Innenkante 26 des Förderriemens 10 mit geringem seitlichem Abstand. Der untere Schenkel 25 verläuft unter dem unteren Rand der Gleitschiene 16, die an dieser Stelle nicht durch den Tragarm 15 abgestützt ist. Der Umgriff 23 überragt die Unterseite des Mittelteils 21 des Werkstückträgers 20 nach unten. Diese Unterseite liegt etwa auf gleicher Höhe wie die Oberseite der Förderriemen 10.

Der Förderriemen 10 wird durch die Führungsnut 17 und die Rippe 18 in bezug auf die Gleitschiene 16 zentriertgehalten. Die Zentrierung des Werkstückträgers 20 erfolgt durch die beiden Umgriffe 23 an den Innenkanten 26 der Förderriemen. Da die Förderriemen einen genau bemessenen konstanten Abstand voneinander haben, kann der Werkstückträger 20 sich nicht horizontal bewegen. Die Oberseite der Führungsleiste 16 ist eben und sie weist keine seitlich vom Förderriemen 10 aufragenden Teile auf, so daß der seitliche Zugriff zum Werkstückträger 20 nicht beeinträchtigt wird.

Im Rücklauftrum 12 ist eine profilleiste 13a vorgesehen, die nur geringfügig von der Profilleiste 13 des Obertrums abweicht, wobei der Tragarm 15 seitlich von dem unteren Ende der profilleiste nach innen absteht. Auf dem Tragarm 15 befindet sich eine Gleitschiene 16a, auf der der Riemen 10 mit nach oben gerichteter Rippe 18 läuft. Mit Abstand über dem Tragarm 15 verläuft ein Steg 28, der den Förderriemen 10 auf einem Teil seiner Breite mit Abstand überdeckt. Die Gleitschiene 16a ist auch hier ohne seitliches Spiel an dem Tragarm verankert. Die Innenkante 26 des Förderriemens 10 steht geringfügig über die Gleitschiene 16a hinaus vor.

Im Rücklauftrum 12 umgreift der Umgriff 24 den Tragarm 15, die Gleitschiene 16a und den Förderriemen 10, wobei er mit seinem Schenkel 25 auf der Oberseite des Förderriemens aufliegt und damit den Werkstückträger 20 hängend am Förderriemen festhält. Durch die Reibung des Schenkels 25 am Förderriemen 10 wird der Werkstückträger 20 mit dem Förderriemen mitgenommen. Die kombinierte Dicke von Tragarm 15, Gleitschiene 16a und Förderriemen 10 ist kleiner als die Innenseite des Umgriffs 24. Die Außenkante 29 des Förderriemens 10 läuft entlang eines nach oben gerichteten Steges 30 der Gleitschiene 16a, so daß der Förderriemen zwischen dem Steg 30 der Gleitschiene und dem vertikalen Schenkel 24 des Werkstückträgers 20 zentriert wird. Die beiden äußeren Stege der einander gegenüberliegenden Gleitschienen zentrieren somit die beiden Förderriemen 10 und den Werkstückträger 20. Eine derartige Zentrierung kann auch bei dem Obertrum vorgenommen werden, wobei die Führungsnuten und Rippen dann nicht erforderlich wären und die Gleitschiene 16 eine Anlagekante für die Außenkante des Förderriemens 10 hätte.

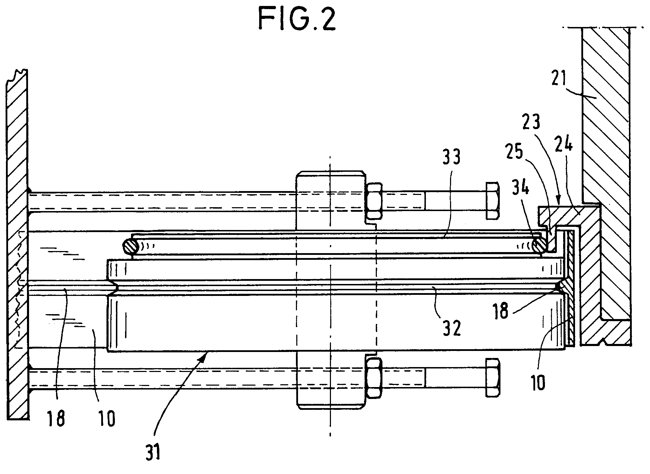

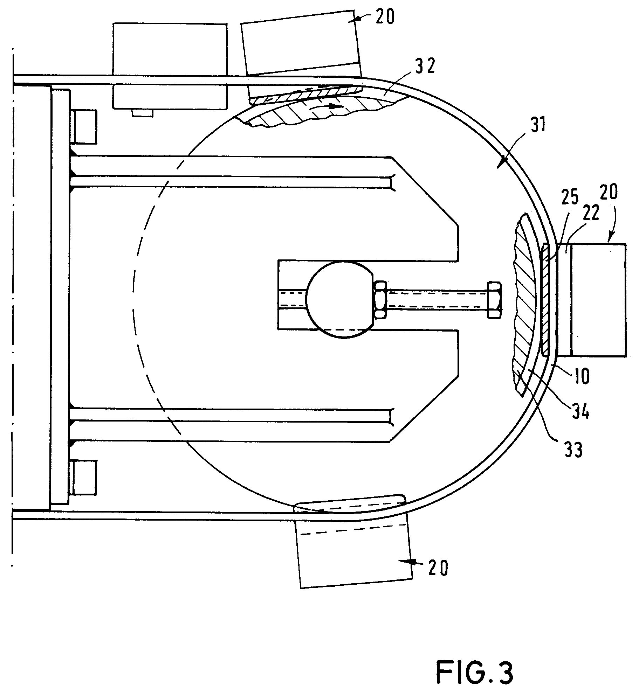

In den Fign. 2 und 3 ist eine Umlenkrolle 31 dargestellt, um die ein Förderriemen 10 umläuft. Diese Umlenkrolle 31 hat eine zylindrische Außenfläche, in der eine Führungsnut 32 für den Eingriff der Rippe 18 außermittig vorgesehen ist. An der Innenseite der Umlenkrolle 31 ist eine Hilfsrolle 33 von kleinerem Durchmesser befestigt. Diese Hilfsrolle hat eine elastomere Umfangsfläche 34 in Form eines O-Ringes oder einer dicken Elastomerbeschichtung. Während der Förderriemen 10 flächig auf dem Umfang der Umlenkrolle 31 aufliegt, drückt der Schenkel 25 gegen die zurückliegende elastomere Umfangsfläche 34, die dadurch örtlich zusammengedrückt wird. Beim Umlauf um die Umlenkrolle 31 drückt die elastomere Umfangsfläche 34 den Schenkel 25 des Werkstückträgers 20 nach außen, so daß der Schenkel 25 die Unterseite des Förderriemens 12 unmittelbar berührt und den Förderriemen in die in Fig. 3 dargestellte Position drückt, wo ein Teil des Förderriemens über dem Schenkel 25 flachliegt. Dadurch, daß die elastomere Umfangsfläche 34 den Werkstückträger 20 exakt radial nach außen drückt, behält der Werkstückträger beim Umlauf um die Umlenkrolle seine tangentiale Ausrichtung zur Umlenkrolle bei.

## Patentansprüche

1. Duplexförderer mit zwei auf ortsfesten Gleitschienen (16) laufenden parallelen Förderriemen (10) und Werkstückträgern (20), die mit ihren Seitenrändern lose auf den Förderriemen (10) aufliegen und die bei unter den Werkstückträgern (20) weiterlaufenden Förderriemen (10) angehalten werden können,
**dadurch gekennzeichnet,**
daß die Förderriemen (10) durch längslaufende Rippen (18) und Führungsnuten (17) mit den Gleitschienen (16) zusammengreifen, und daß die Werkstückträger (20) die einander zugewandten Innenkanten (26) der Förderriemen (10) U-förmig umgreifen, wobei ein senkrechter Schenkel (24) des Umgriffs (23) eine Zentrierfläche bildet und der Umgriff (23) den Werkstückträger (20) im Rücklauftrum (12) des Förderriemens an diesem aufhängt.

2. Duplexförderer nach Anspruch 1, dadurch gekennzeichnet, daß die Werkstückträger (20) beide Förderriemen (10) vollständig überdecken und an ihren Rändern Angriffsleisten (21) zum Angreifen ortsfest montierter Klemm- oder Positioniervorrichtungen aufweisen.

3. Duplexförderer nach Anspruch 1 oder 2, dadurch gekennzeichnet, daß die Förderriemen (10) im Rücklauftrum (12) auf Gleitschienen (16a) laufen, die an ihren äußeren Kanten jeweils eine vertikale Führungsfläche (30) aufweisen.

4. Duplexförderer nach einem der Ansprüche 1-3, dadurch gekennzeichnet, daß die Förderriemen (10) im Rücklauftrum (12) auf Gleitschienen (16a) laufen, die jeweils auf einem Auslegerarm (15) einer Profilleiste (13a) liegen, wobei die Gesamtstärke von Auslegerarm (15), Gleitschiene (16a) und Förderriemen (10) über die gesamte Breite geringer ist als die lichte Weite des Umgriffs (23) der Werkstückträger (20).

5. Duplexförderer nach einem der Ansprüche 1-4, dadurch gekennzeichnet, daß die Umlenkrollen (31) für die Förderriemen (10) jeweils eine Hilfsrolle (33) kleineren Durchmessers aufweisen, welche eine elastomere Umfangsfläche (34) aufweist, die beim Umlaufen eines Werkstückträgers (20) von dessen Umgriff (23) teilweise flachgedrückt wird.
